# FASCICULE DE BREVET EUROPEEN

(11) **EP 1 541 834 B1**
(45) Date de publication et mention de la délivrance du brevet: **18.05.2016**
(21) Numéro de dépôt: 04300858.0
(22) Date de dépôt: 08.12.2004
(51) Int. Cl.: F02C 7/32

(54) **Turboreacteur à double corps avec un engrenage differentiel pour l'entraînement des machines accessoires**
Zweiwellenflugtriebwerk mit einem Differentialgetriebe
Twin-shaft turbojet engine with differential gearbox for auxiliary power drive

(30) Priorité: 09.12.2003 FR 0314429
(43) Date de publication de la demande: 15.06.2005
(73) Titulaire: SNECMA, 75015 Paris (FR)
(72) Inventeur: Lardellier, Alain, 77000, Melun (FR)
(74) Mandataire: Gevers & Orès

(56) Documents cités:
- FR-A- 1 154 253
- FR-A- 2 520 806
- FR-A- 2 606 077
- FR-A- 2 639 609
- GB-A- 759 606
- GB-A- 971 690
- GB-A- 973 388
- US-A- 4 776 163
- US-A- 5 103 631

## Description

La présente invention se rapporte au domaine des turbomoteurs à double corps pour la propulsion des avions ou autres aéronefs et vise en particulier les turboréacteurs à double corps dont les rotors sont libres en rotation l'un par rapport à l'autre et dont le rotor basse pression entraîne une soufflante.

Une partie de la puissance fournie par les turbomoteurs aéronautiques est utilisée pour alimenter les servitudes à la fois des turbomoteurs eux-mêmes et de l'avion dont ils assurent la propulsion.

Cette puissance est actuellement prélevée en partie mécaniquement sur l'arbre de l'étage haute pression du moteur à double corps pour entraîneur l'arbre d'entrée d'un boîtier d'accessoires. Pour un turboréacteur à turbosoufflante par exemple le boîtier d'accessoires est disposé sur le carter de la soufflante. Son arbre d'entrée est généralement entraîné par un arbre de transfert logé dans l'un des bras structuraux du carter et relié à travers un boîtier de renvoi d'angle à un pignon solidaire de l'arbre haute pression. Différentes machines accessoires, telles que générateurs et pompes hydrauliques à carburant ou huile, sont contenues et entraînées dans ce boîtier.

Une autre partie du prélèvement est constituée par l'air sous pression prélevé au compresseur haute pression pour assurer notamment la pressurisation et le conditionnement de la cabine de l'avion ou bien le dégivrage.

La tendance actuelle vise à augmenter la part du prélèvement de puissance mécanique en raison de la part croissante des moyens électriques, réputés plus souples d'emploi.

Cependant un prélèvement de puissance mécanique élevé a un effet négatif sur le fonctionnement du corps haute pression car il est susceptible de provoquer le pompage du compresseur, en particulier quand le moteur fonctionne à bas régime.

Une solution envisageable consiste à prélever une partie de la puissance mécanique sur le corps basse pression. Cependant on rencontre alors un autre problème car le rapport entre les vitesses pour les deux corps varie considérablement entre le régime au ralenti et le régime à plein gaz. Par exemple, entre le ralenti et le plein gaz le corps haute pression passe de 10.000 à 16.000 tours/min, alors que le corps basse pression passe de 900 à 4.500 tours/min. Pour le premier le rapport est de 1,6 alors que pour le second il est de 5. Au ralenti la puissance disponible sur le corps BP deviendrait donc trop faible par rapport au régime plein gaz. Cela constitue un handicap d'autant plus gênant que la demande en puissance sur un avion est aussi importante, si ce n'est plus, au ralenti qu'en régime de croisière.

Le document US5103631 décrit un turboréacteur avec un engrenage differentiel selon le préambule de la revendication 1.

Une solution consisterait à interposer une boîte de vitesse automatique entre les deux arbres mais elle apparaît lourde et nécessiterait un pilotage électro hydraulique particulier.

L'invention permet de résoudre le problème de façon satisfaisante.

Conformément à l'invention, le turbomoteur à double corps et à soufflante avec un corps haute pression HP et un corps basse pression BP, comportant des machines accessoires qu'il entraîne par l'intermédiaire d'un moyen de transmission mécanique comprenant un engrenage différentiel avec un premier pignon planétaire entraîné par l'arbre du corps haute pression et un deuxième pignon planétaire entraîné par l'arbre du corps basse pression, les dits pignons planétaires entraînant des pignons satellites montés dans une cage par laquelle les machines accessoires sont entraînées est caractérisé par le fait que ledit engrenage différentiel est monté sur le carter de ladite soufflante, que lesdits pignons planétaires et ladite cage sont co-rotatifs et que le rapport de transmission mécanique R₁ entre l'arbre HP et le premier pignon planétaire de l'engrenage différentiel d'une part et le rapport de transmission R₂ entre l'arbre BP et le second pignon planétaire du différentiel d'autre part sont tels que la répartition du prélèvement de puissance entre le corps HP et le corps BP en régime ralenti est compris entre 80%/20% et 20%/80% et en tous les cas tels que le fonctionnement du compresseur HP n'est pas affecté par la puissance maximale soutirée par les machines accessoires

Ainsi le pourcentage de puissance dévolue au corps HP est réduit afin que le compresseur HP fonctionne correctement, en particulier au ralenti, soit 20% BP, 80% HP, typiquement dans l'exemple rapporté plus loin, au lieu de 0% BP, 100% HP dans la situation actuelle de l'état de la technique.

Ainsi grâce à l'invention, par l'emploi d'un engrenage différentiel dans la chaîne cinématique entre les deux arbres moteurs et les machines réceptrices, on peut choisir une répartition appropriée de prélèvement de puissance entre les régimes à rotation élevée et au ralenti.

Conformément à un premier mode de réalisation la cage du différentiel est reliée à un boîtier d'accessoires dans lequel au moins une partie desdites machines accessoires est rassemblée.

La solution de l'invention est particulièrement avantageuse dans une configuration tout électrique où l'ensemble des machines accessoires est constitué de générateurs électriques.

De préférence le différentiel est du type autobloquant. En cas de rupture de l'un des arbres on assure ainsi la transmission entre le moteur et les machines.

On décrit maintenant l'invention plus en détail, en référence aux dessins sur lesquels

La figure 1 représente schématiquement une vue en coupe d'un agencement conforme à un premier mode de réalisation de l'invention,

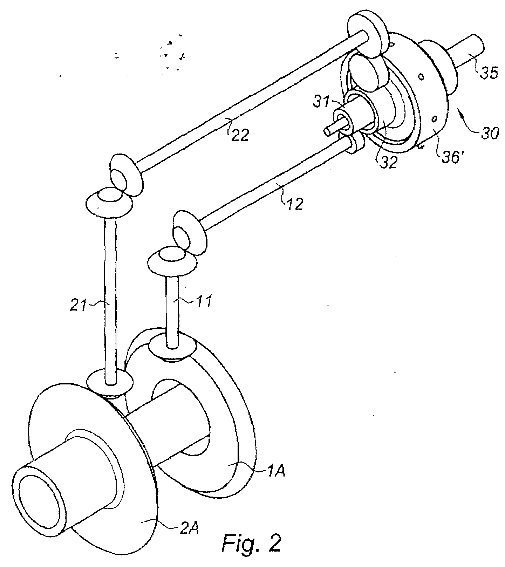

La figure 2 est une vue isométrique de l'agencement selon la figure 1,

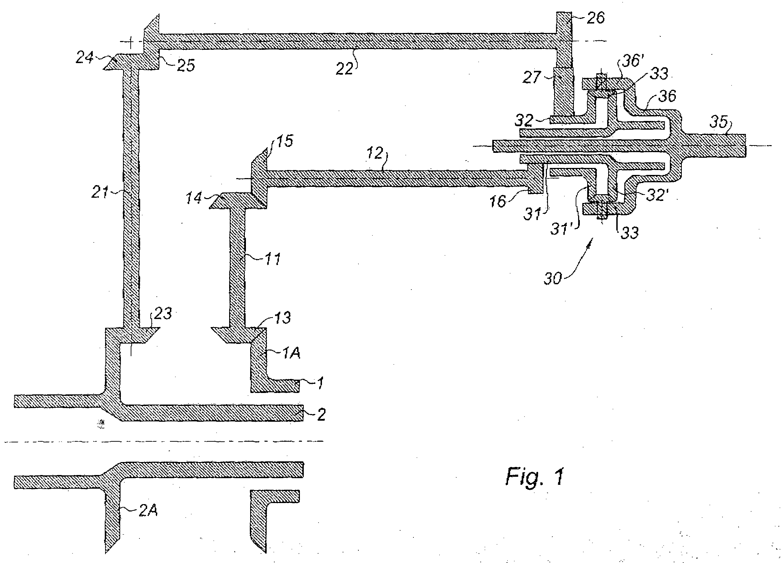

En se reportant à la figure 1, on voit représenté un exemple de chaîne cinématique entre les deux arbres 1 et 2 du turboréacteur à double corps d'une part et l'arbre 35 de sortie du différentiel 30 d'autre part par lequel une machine réceptrice, tel qu'un générateur, est entraînée. Le turboréacteur n'a pas été représenté.

Une extrémité de l'arbre 1 du corps haute pression est pourvue d'un pignon conique 1A. Par exemple, il peut s'agir de son extrémité amont du côté de la soufflante. L'arbre 2 du corps basse pression du moteur est concentrique à l'arbre 1. Il comprend également, du même côté, un pignon conique 2A. Comme cela est connu dans le domaine, les deux arbres sont montés dans des paliers appropriés, sont mis en rotation par leurs rotors de turbines respectifs, et tournent librement l'un par rapport à l'autre. Dans les turbomoteurs à soufflante communément exploités actuellement, l'arbre basse pression se prolonge vers l'amont où il entraîne le rotor de la soufflante.

Un arbre de transmission 11, pourvu de pignons coniques 13 et 14 à ses deux extrémités, est disposé perpendiculairement à l'axe des arbres du moteur. Le premier pignon 13 est en prise sur le pignon 1A. Un deuxième arbre de transmission 12 engrène par un pignon 15 sur le pignon 14 du premier arbre 11. Il comprend un autre pignon 16 à son autre extrémité qui engrène sur un élément tubulaire 31 formant une première entrée du différentiel 30. Les paramètres dimensionnels de cette transmission sont définis de manière que le rapport R₁ de réduction des vitesses entre la vitesse de rotation de l'arbre 1 et la vitesse de rotation de l'élément tubulaire 31 formant la première entrée du différentiel, soit égal à une valeur déterminée. Le montage présenté sur la figure 1 n'est qu'un exemple de réalisation. On comprend que l'homme du métier peut obtenir une transmission mécanique de rapport R₁ déterminé entre l'arbre 1 et l'entrée du différentiel de multiples façons, y compris en changeant, pour des raisons de construction, l'inclinaison et le nombre d'arbres de transmission de la chaîne cinématique par rapport au schéma de la figure 1.

De manière semblable pour ce qui concerne le corps basse pression. Un arbre 21 perpendiculaire à l'axe du moteur est pourvu des pignons 23 et 24 à ses extrémités, par lesquels il transmet le mouvement rotatif de l'arbre 2 à un arbre 22 parallèle à l'arbre 12. L'arbre 22 comprend les pignons 25 et 26 à ses extrémités. Un pignon 27 coaxial avec le pignon 26 engrène avec un deuxième élément tubulaire 32 du différentiel 30. Cet élément forme la seconde entrée du différentiel. Comme pour le premier arbre, les paramètres dimensionnels sont définis de façon que le rapport R₂ de réduction des vitesses entre la vitesse de rotation de l'arbre 2 et la vitesse de rotation de l'élément tubulaire 32 formant la seconde entrée du différentiel, soit égal à une valeur déterminée différente de R₁. On peut obtenir une transmission mécanique de rapport R₂ déterminé entre l'arbre 2 et la seconde entrée du différentiel aussi de multiples façons, y compris en changeant, pour des raisons de construction, l'inclinaison et le nombre d'arbres de transmission de la chaîne cinématique par rapport au schéma de la figure 1.

En raison de la vitesse notablement plus élevée du corps HP, le rapport de réduction R₁ est plus grand que celui R₂ du corps BP.

Le différentiel 30 est constitué d'un boîtier 36 rotatif qui se prolonge par un arbre 35 dont il est solidaire et dont l'axe est parallèle aux arbres 12 et 22. Le boîtier comprend un anneau cylindrique 36', coaxial à l'arbre 35. Une pluralité de pignons coniques 33 est montée sur des axes de rotation radiaux solidaires de la paroi interne de l'anneau cylindrique 36'. L'ensemble forme la cage du différentiel. Les éléments tubulaires 31 et 32 sont concentriques et comprennent chacun à leur extrémité un disque planétaire, 31' et 32' respectivement, perpendiculaire à leur axe. Ils sont espacés l'un de l'autre et comportent à la périphérie une piste d'engrenage conique qui engrène sur les pignons 33 entre lesquels ils sont disposés. Les pignons coniques 33 forment ainsi les satellites du différentiel.

Sur le schéma fonctionnel de la figure 1, les arbres 1 et 2 sont co-rotatifs, et la disposition de la transmission est telle que les éléments tubulaires 31 et 32 d'entrée du différentiel sont également co-rotatifs, ainsi que la cage des satellites.

Selon un autre mode de réalisation non représenté, les arbres 1 et 2 sont contra-rotatifs, la transmission est alors adaptée de façon que les entrées du différentiel soient co-rotatives. Par rapport au mode de réalisation ici représenté, il suffit alors de prévoir un pignon d'inversion du sens de rotation sur l'une des transmissions.

En pratique, l'engrenage différentiel est disposé sur le carter de la soufflante du turboréacteur. Les deux arbres de transmission peuvent être logés à l'intérieur de deux bras structuraux adjacents du carter.

A l'intérieur de l'engrenage différentiel, les deux planétaires 31'et 32' entraînent en rotation les satellites 33 qui se déplacent à leur périphérie et mettent en mouvement la cage 36 à une vitesse qui est fonction de la vitesse de rotation des deux planétaires. L'arbre 35 est en prise pas exemple sur l'arbre d'entrée d'un boîtier d'accessoires dont il entraîne les machines qui y sont disposées ;

On décrit maintenant le fonctionnement du dispositif et l'intérêt qu'il représente.

Comme on l'a mentionné plus haut les deux arbres 1 et 2 tournent à des vitesses différentes, N₁ et N₂. Ces deux vitesses sont réduites dans les rapports R₁ et R₂ fonctions de l'agencement de la transmission. On a donc N₁/R₁ et N₂/R₂ respectivement, à l'entrée du différentiel 30. La vitesse de sortie du différentiel, celle de l'arbre 35, est aussi bien définie. On la détermine simplement à partir de la constatation selon laquelle la vitesse de rotation de la cage est égale à la moitié de la vitesse du second planétaire si le premier est à vitesse nulle : ainsi la vitesse de rotation de la cage est (N₁/R₁ - N₂/R₂)/2 + N₂/R₂, soit N₁/R₁/2 + N₂/R₂/2.

Connaissant les vitesses à l'entrée du différentiel et celle de l'arbre de sortie, on en déduit les rapports entre les puissances prélevées sur chacun des deux arbres. Ils sont égaux respectivement au rapport entre les vitesses à l'entrée correspondante du différentiel et la vitesse à la sortie. Si F est la force d'entraînement tangentielle de la cage au niveau des satellites,
la puissance sur l'arbre de sortie est F * (N₁/R₁/2 + N₂/R₂/2) ;
la puissance sur le premier planétaire est F/2 * N₁/R₁
la puissance sur le second planétaire est F/2 * N₂/R₂

Ainsi, sachant que les vitesses à l'entrée du différentiel des deux planétaires sont déterminées par le rapport de réduction de vitesse de la transmission, on peut, par les rapports R₁ et R₂, répartir à volonté entre les deux arbres, la puissance fournie aux machines accessoires, ainsi que choisir la vitesse du différentiel.

On illustre la solution de l'invention par l'exemple suivant.

On fixe les rapports de réduction des vitesses R₁ = 4 et R₂ = 1

| | | Plein gaz | Ralenti |
|---|---|---|---|
| Corps haute pression : | N₁ | 16.000 | 10.000 |
| | N₁/R₁ | 4.000 | 2.500 |
| Corps basse pression : | N₂ | 4.500 | 1.000 |
| | N₂/R₂ | 4.500 | 1.000 |
| Sortie différentiel | Nd | 4.250 | 1.750 |

Les vitesses de rotation sont en tours par minutes.

On en déduit les pourcentages de puissance prélevée aux deux corps respectivement :

| | | |
|---|---|---|
| Rotor haute pression | 47% | 72% |
| Rotor basse pression | 53% | 28% |

Avec ces deux rapports tels que choisis, on observe que, au régime plein gaz, la répartition est sensiblement équilibrée alors qu'au ralenti la puissance fournie par le rotor haute pression est relativement plus élevée. Ceci n'est pas un inconvénient si l'on a vérifié par ailleurs que la puissance fournie par le rotor haute pression ne dépassait pas un seuil au-delà duquel le compresseur viendrait à pomper.

On vérifie également que la vitesse maximale du différentiel (4250 t/min dans notre exemple) ne dépasse pas une valeur fixée par sa tenue mécanique et la durée de vie des satellites.

Si tel n'est pas le cas, il suffit de sélectionner une autre combinaison des rapports R₁ et R₂ pour obtenir l'objectif désiré.

De préférence R₁ est compris entre 1,5 et 5 pour R₂ = 1 ou bien entre 3 et 10 pour R₂=2.

L'invention ne se limite pas aux modes de réalisation illustrés par les dessins ; de multiples variantes restant dans le cadre de son enseignement sont à la portée de l'homme du métier.

## Revendications

1. Turboréacteur à double corps et à soufflante ayant un carter avec un arbre (1) du rotor haute pression et un arbre (2) du rotor basse pression comportant des machines accessoires qu'il entraîne par l'intermédiaire d'un moyen de transmission mécanique comprenant un engrenage différentiel (30) avec un premier pignon planétaire (31) entraîné par l'arbre du corps haute pression et un deuxième pignon planétaire (32) entraîné par l'arbre du corps basse pression, les dits pignons planétaires entraînant des pignons satellites (33) montés dans une cage (36) par laquelle les machines accessoires sont entraînées. **caractérisé par le fait que**
ledit engrenage différentiel (30) est monté sur le carter de ladite soufflante, que
lesdits pignons planétaires et ladite cage sont co-rotatifs et que
le rapport de transmission mécanique R₁ entre l'arbre (1) haute pression et le premier pignon planétaire (31) de l'engrenage différentiel et le rapport de transmission R₂ entre l'arbre (2) basse pression et le second pignon planétaire (32) du différentiel sont tels que la répartition du prélèvement de puissance entre le corps HP et le corps BP en régime ralenti est compris entre 80%/20% et 20%/80% et en tous les cas tels que le fonctionnement du compresseur HP n'est pas affecté par la puissance maximale soutirée par les machines accessoires.

2. Turboréacteur selon la revendication 1 dont la cage (36) formant l'organe de sortie de l'engrenage différentiel est reliée à un boîtier d'accessoires dans lequel au moins une partie des dites machines accessoires est rassemblée.

3. Turboréacteur selon l'une des revendications précédentes dont l'engrenage différentiel est du type autobloquant.

4. Turboréacteur selon la revendication 1 dont l'un des arbres entraîne une soufflante.

5. Turboréacteur selon la revendication 1 dont les machines accessoires sont essentiellement des générateurs électriques.

## Patentansprüche

1. Turbinenstrahltriebwerk in Zweiwellenanordnung und mit Gebläse, mit einem Gehäuse das eine Welle (1) des Hochdruckrotors und eine Welle (2) des Niederdruckrotors hat, das Zubehörmaschinen umfasst, die es über ein mechanisches Übertragungsmittel antreibt, das ein Differenzialgetriebe (30) mit einem ersten Planetenrad (31) umfasst, das von der Welle des Hochdruckkörpers angetrieben wird, und ein zweites Planetenrad (32), das von der Welle des Niederdruckkörpers angetrieben wird, wobei die Planetenräder Satellitenräder (33) antreiben, die in einen Käfig (36) montiert sind, durch den die Zubehörmaschinen angetrieben werden, **dadurch gekennzeichnet, dass**
das Differenzialgetriebe (30) auf dem Gehäuse des Gebläses installiert ist, dass
die Planetenräder und der Käfig gemeinsam drehen, und dass
das mechanische Übersetzungsverhältnis R₁ zwischen der Hochdruckwelle (1) und dem ersten Planetenrad (31) des Differenzialgetriebes und das Übersetzungsverhältnis R₂ zwischen der Niederdruckwelle (2) und dem zweiten Planetenrad (32) des Differenzialgetriebes derart sind, dass die Verteilung der Leistungsentnahme zwischen dem HD-Körper und dem ND-Körper bei Leerlauf zwischen 80 %/20 % und 20 %/80 % liegt, und auf jeden Fall derart, dass der Betrieb des HD-Verdichters durch die maximale Leistung, die von den Zubehörmaschinen abgenommen werden, nicht beeinträchtigt wird.

2. Turbinenstrahltriebwerk nach Anspruch 1, dessen Käfig (36), der das Ausgangsorgan des Differenzialgetriebes bildet, mit einem Gehäuse von Zubehörteilen verbunden ist, in dem mindestens ein Teil der Zubehörmaschinen vereint ist.

3. Turbinenstrahltriebwerk nach einem der vorhergehenden Ansprüche, dessen Differenzialgetriebe des selbst blockierenden Typs ist.

4. Turbinenstrahltriebwerk nach Anspruch 1, von dem eine der Wellen ein Gebläse antreibt.

5. Turbinenstrahltriebwerk nach Anspruch 1, dessen Zubehörmaschinen im Wesentlichen Stromgeneratoren sind.

## Claims

1. A twin-spool turbojet with a fan having a fan case with a shaft (1) of the high pressure rotor and a shaft (2) of the low pressure rotor including ancillary machines which it drives via mechanical transmission means comprising a differential gear (30) with a first planetary pinion (31) driven by the shaft of the high pressure spool and a second planetary pinion (32) driven by the shaft of the low pressure spool, said planetary pinions driving satellite pinions (33) mounted into a cage (36) by which the ancillary machines are driven, **characterized by** the fact that
said differential gear (30) is mounted on said fan case, that
said planetary pinions and said cage are co-rotary and that
the mechanical transmission ratio R₁ between the high pressure shaft (1) and the first planetary pinion (31) of the differential gear and the transmission ratio R₂ between the low pressure shaft (2) and the second planetary pinion (32) of the differential gear are such that the power extraction distribution between the high pressure spool and the low pressure spool at idle speed is between 80%/20% and 20%/80% and in any case such that the operation of the high pressure compressor is not affected by the maximum power drawn by the ancillary machines.

2. The turbojet according to claim 1, the cage (36) of which forming the output unit of the differential gear, is connected to an accessory casing wherein at least a portion of said ancillary machines are grouped together.

3. The turbojet according to one of the preceding claims, the differential gear of which is of the self-blocking type.

4. The turbojet according to claim 1, one of the shafts of which drives a fan.

5. The turbojet according to claim 1, the ancillary machines of which are substantially electric generators.
